# EUROPEAN PATENT APPLICATION

(11) **EP 4 703 781 A1**
(43) Date of publication of application: **04.03.2026**
(21) Application number: 24198297.4
(22) Date of filing: 03.09.2024
(51) Int. Cl.: G02B 6/44, G02B 6/032

(54) **OPTICAL FIBER CABLE COMPRISING A HOLLOW CORE FIBER**

(71) Applicant: Microsoft Technology Licensing, LLC, Redmond, WA 98052 (US)
(72) Inventor: Lang, Ian Dewi, Romsey (GB); Appleyard, Andrew Paul, Romsey (GB); Horley, Raymond John, Romsey (GB); Gaudette, Jamie, Redmond (US)
(74) Representative: CMS Cameron McKenna Nabarro Olswang LLP

(57) **Abstract**

An optical fiber cable comprising a cable element. The cable element comprises a hollow core optical fiber (HCF). A lay length of the cable element is in a range of 325 mm to 500 mm, in a range of 375 mm to 450 mm, is approximately 400 mm, or is approximately 450 mm. Also, a method of manufacturing the optical fiber cable, and a method of transmitting information using the cable.

## Description

### BACKGROUND

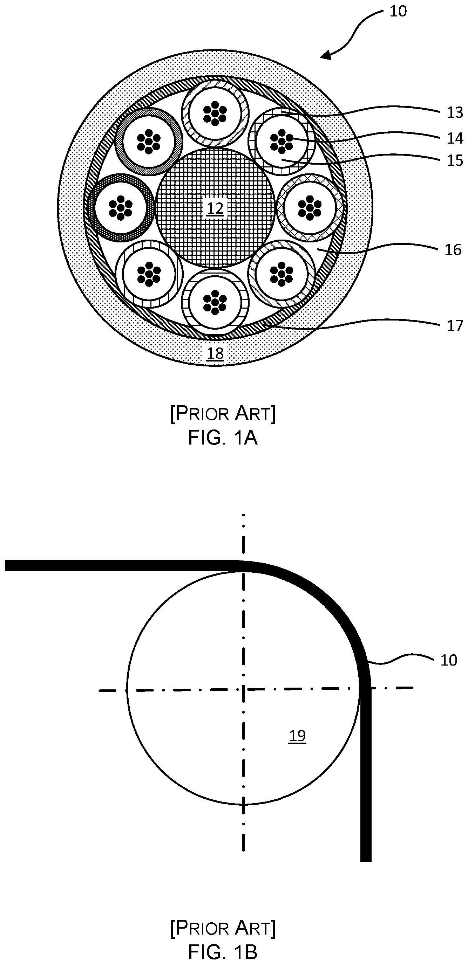

Optical fiber cables may comprise a plurality of optical fibers, such as hollow core fibers (HCFs), solid core fibers (SCFs) and other types of optical fibers, including combinations of mixed types of optical fiber cables. An example of a large optical fiber cable of the prior art is shown in FIG. 1A.

FIG. 1A illustrates an optical fiber cable 10 of the prior art comprising a central strength member (CSM) 12, which may be a glass fiber reinforced plastic material. FIG. 1A illustrates an example of a multi-loose tube (MLT) optical fiber cable design (a cable comprising a plurality of tubes comprising a plurality of optical fibers therein). Surrounding the CSM 12 are eight colored buffer tubes 13, each buffer tube surrounding seven optical fibers 14. The color of each buffer tube 13 may be distinct to aid the identification of the particular set of optical fibers 14 contained within. The void within the buffer tubes 13 may be filled by a filling compound 15 that may be directly in contact the optical fibers 14. In other examples, the optical fibers 14 may fill the buffer tube 13 and no filling compound is present. A surrounding strength member 17 is wrapped around the colored tubes to bind them around the CSM 12. In some examples, the surrounding strength member 17 may comprise aramid fibers. There may be space 16 between the buffer tubes 13. An outer jacket 18 surrounds the inner components and the material and thickness thereof are dependent upon the intended use of the cable 10, for example dependent upon whether the cable may be exposed to water, ultraviolet light, mechanical forces, etc. The number and type of optical fibers 14 within each buffer tube 13 may differ between respective buffer tubes, may vary depending on the intended use of the optical fiber cable 10 and may be zero in one or more buffer tubes (for zero optical fibers a buffer tube may be substituted by a solid filler element). The number of buffer tubes 13 may also vary. The buffer tube may also be known as a "cable element".

A HCF is a type of optical fiber that guides light within a hollow region running along the fiber. Only a minor portion of the light propagates in the solid fiber material, which typically will be glass. A HCF cross-section is generally larger than a cross-section of a single mode optical telecommunication fiber because the HCF contains light guiding microstructures but must also have sufficient material to preserve mechanical integrity. The increased HCF cross-section leads to increased optical fiber stiffness. Stiffness can be measured as a second moment of the fiber material, e.g. glass, whereby a second moment of area is a measure of a shape's resistance to change. As such, second moment of an optical fiber or optical fiber cable is a measurement of the optical fiber or optical fiber cable resistance to a change of shape corresponding to a change of a longitudinal central axis of the fiber or cable away from normal.

Applying a change of shape to an optical fiber cable may cause a degree of bending of the cable measured as a bend radius, which is a measurement of the inside curvature of the cable. FIG. 1B illustrates a bend radius of the optical fiber cable 10 around a cylinder 19; the bend radius of the cable 10 is the radius of the cylinder 19. A minimum bend radius is the radius below which an optical fiber cable should not be bent. The smaller the achievable design minimum bend radius, the greater the optical fiber cable flexibility and the easier the cable will be to install. A bend radius may provide a minimum radius that an optical fiber cable can be bent without kinking it, damaging the cable or the optical fibers contained within the cable, or shortening the life of the cable. Excessive bending of an optical fiber cable may cause microbending and macrobending transmission loss of optical fibers of the cable. Microbending may cause light attenuation induced by deformation. Macrobending and microbending may cause leakage of light through an optical fiber cladding.

An optical fiber cable may specify (i) a minimum radius to which the optical fiber cable may safely be bent during installation and/or (ii) a minimum radius to which the optical fiber cable may safely be bent for long-term use. The installation figure will be smaller than the long-term use figure.

Optical fiber cables contain ever increasing numbers of optical fibers therein and the cables may include a mix of HCFs and SCFs. As discussed above, bending a HCF to the same diameter as a conventional solid single mode fiber may require a higher load. When such a higher load is applied to an optical fiber the results may include degradation of transmission performance due to increased microbending and macrobending losses. Furthermore, as the diameters of optical fiber cables increase, a set bend radius will cause increasing outside surface strain reducing life expectancy of the optical fiber cables.

The embodiments described below are not limited to implementations which solve any or all of the disadvantages of known optical fiber cable design, manufacture or use.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

An optical fiber cable comprising a cable element. The cable element comprises a hollow core optical fiber (HCF). A lay length of the cable element is: in a range of 325 mm to 500 mm, in a range of 375 mm to 450 mm, is approximately 400 mm, or is approximately 450 mm. The cable element lay length being greater than a traditional single mode fibers cable element lay length provides an optical fiber cable that has a suitable minimum bend radius despite the cable comprising HCF, which has a fiber diameter greater than traditional single mode fiber (SMF). Simply replacing traditional fibers with HCF in a cable would not provide a suitable cable for installation through ducting using blowing.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1A illustrates a schematic diagram of an optical fiber cable of the prior art.
FIG. 1B illustrates a bend radius of the optical fiber cable of the prior art.
FIG. 2A illustrates exemplary first MLT cable.
FIG. 2B illustrates exemplary second MLT cable.
FIG. 3 illustrates exemplary third MLT cable.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

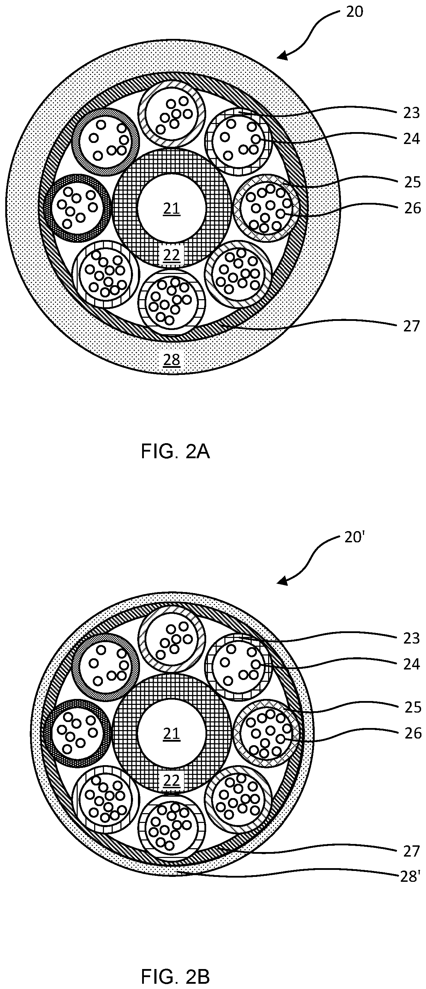

FIG. 2A illustrates an exemplary first MLT cable 20 in cross-section. The MLT cable 20 comprises a central strength member (CSM) 21 running along a central axis of the cable 20. The CSM 21 is formed from a GRP material. A jacket 22 may surround the CSM 21. The jacket 22 may be a polymer material, such as polyethylene low linear density (PELLD), polyethylene high-density (PEHD), low smoke zero halogen (LSHF), or polypropene (PP). Eight tube-shaped cable elements 23, 25 surround the jacket 22. Each cable element may have a distinct color and contain the same or different number or arrangement of optical fibers 24, 26 as one or more other cable elements 23, 25. Some or all of the optical fibers 24, 26 are HCFs. A surrounding strength member 27 is wrapped around the cable elements 23, 25. The surrounding strength member 27 may comprise aramid fibers. An outer sheath 28 surrounds the strength member 27 and provides environment protection of the MLT cable 20 and may be specific to an environment that a cable is to be installed in. In this example, the outer sheath 28 is a low smoke zero halogen (LSZH) compound. The cable elements may be S-Z stranded around the CSM 21 and jacket 22. The cable elements may be formed of a thermoplastic tube comprising an optical fiber buffer within a water blocking compound. At least one cable element comprises a plurality of SMFs. Another cable element comprises a plurality of HCFs. In one example, half of the cable elements may comprise 12 SMFs and the other half may comprise HCFs. Each cable element diameter may be approximately 2.8 mm. The CSM diameter may be approximately 4.6 mm. The cable 20 diameter may be approximately 14 mm. The minimum bending radius may be approximately 140 mm without tension and 280 mm under maximum tension. The temperature range for installation may be approximately 0°C to approximately 50°C; the temperature range for transport and storage may be approximately -20°C to approximately 70°C; and the temperature range for installation may be approximately -10°C to approximately 60°C.

FIG. 2B illustrates an exemplary second MLT cable 20' in cross-section. The constituent components of second MLT cable 20' may be the same as for the first but for a different outer sheath material and thickness. The second MLT cable 20' outer sheath 28' has a diameter of approximately 12.8 mm, thickness of approximately 1.4 mm and is made from polyethylene low linear density (PELLD). The second MLT cable 20' diameter may be approximately 12.8 mm. The second MLT cable 20' may have a minimum bending radius of 130 mm without tension and 260 mm under maximum tension.

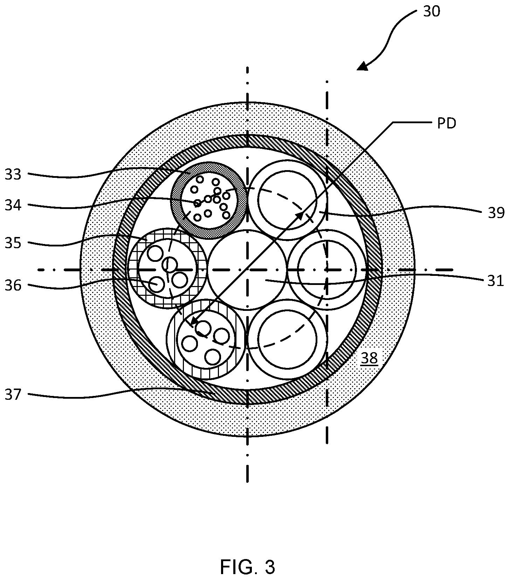

FIG. 3 illustrates an exemplary third MLT cable 30 in cross-section. The MLT cable 30 comprises a central strength member (CSM) 31 running along a central axis of the cable 30. The CSM 31 is formed from a GRP material. Six cable elements 33, 35 are tube-shaped and surround the CSM 31. Three cable elements may have a distinct color and contain optical fibers 34, 36. One cable element 33 comprises 12 SMFs 34, two cable elements 35 each comprise four HCFs 36 and three cable elements comprise no optical fibers. In other examples, the number cable elements, cable elements containing no optical fibers, SCFs, and HCFs may vary. A surrounding strength member 37 is wrapped around the cable elements. The surrounding strength member 37 may comprise aramid fibers. An outer sheath 38 surrounds the strength member 37 and provides environment protection of the MLT cable 30 and may be specific to an environment that a cable is to be installed in. In this example, the outer sheath 38 is a LOW SMOKE HALOGEN FREE (LSHF) (RTM) but may also be a low smoke zero halogen (LSHF) compound. The cable elements may be S-Z stranded around the CSM 31.

Each cable element diameter may be approximately 2.2 mm. The CSM diameter may be approximately 2.2 mm. The cable 30 diameter may be approximately 10.7 mm. The minimum bending radius may be approximately 130 mm without tension and 180 mm under maximum tension. The temperature range for installation may be approximately 0°C to approximately 50°C; the temperature range for transport and storage may be approximately -20°C to approximately 70°C; and the temperature range for installation may be approximately -10°C to approximately 60°C.

FIG. 3 includes center lines indicating the central longitudinal axis of the CSM 31 and of one cable element. All cable elements are wrapped around the CSM 31 and the path of the central axis of the cable elements is indicated using a dashed line. The diameter of the dashed line is a cable characteristic called "element pitch diameter" or "pitch diameter" and in the figure is labelled as "PD".

In some examples, MLT cables may be limited to containing HCFs and no other types of optical fibers.

In the examples and tables below, data for a "single mode fiber (SMF)" and "SMF Cable" are provided. The SMF and SMF Cable values provided are exemplary values for single-mode optical fibers (SMFs) and cables containing SMFs used in communications systems. SMF and SMF Cable values allow a comparison with HCFs and HCF cables disclosed and claimed herein. The SMF may be, for example, a CORNING-28e (RTM) optical fiber. A HCF cable is a cable comprising at least one HCF.

In the examples and tables below, two example HCF cables, "HCF Cable 1" and "HCF Cable 2", are discussed. Each HCF cable contains a number of HCFs: "HCF 1" and "HCF 2" that may be formed from glass. HCF Cable 1 comprises HCF 1 and HCF Cable 2 comprises HCF 2).

TABLE 1 provides values for the fibers within the cables. The "Ratio" value is the ratio of a corresponding HCF 2 value to a corresponding SMF Fiber value.

**TABLE 1**

| | **Unit** | **HCF 1** | **HCF 2** | **SMF** | **Ratio** |
|---|---|---|---|---|---|
| Optical Fiber Diameter | mm | 0.4 | 0.385 | 0.25 | 1.54 |
| Second Moment of Glass Area | (um)^4 | 1.48E+08 | 1.59E+08 | 1.20E+07 | 13.29 |
| Minimum Bend Radius for Equivalent 0.2% Surface Strain | mm | 48 | 59 | 31 | 1.90 |

HCF 1 and HCF 2 have diameters larger than the SMF that leads to the HCFs being much stiffer, which is demonstrated by the ratio of the second moment of glass area of the HCF 2 to the SMF of 13.29. Note that as the size of HCFs vary, the sizes of their internal microstructures will vary, which may also change the respective second moment. The minimum bend radiuses to cause 0.2% surface strain of the HCFs are greater than that of the SMF by almost a ratio of two. The greater bend radius for the HCFs means that they are generally less suitable for cable applications requiring tight bending of the cables using both during installation and in the long-term.

HCFs for use in HCF cables may have outside diameters substantially as provided in TABLE 1, be in a range of 0.27 mm to 0.43 mm, or be in a range of 0.31 mm to 0.33 mm. Approximate HCF cable outside diameters may also be 0.31 mm, 0.385 mm, or 0.4 mm.

For optimal optical transmission performance using HCFs, bending in HCF cables must be limited. Limiting bending of HCFs will also provide an acceptable expected life for HCF cables. However, limiting bending of optical fibers in multi-loose tube (MLT) cables is difficult during both cable installation and use.

MLT cables have loose tubes of optical fibers. The loose tubes are twisted at a certain pitch along the longitudinal axis of the optical fiber cable. A strength member runs along the longitudinal axis. The twisting may be in a specified direction - either an S-direction (clockwise) or an opposite Z-direction (counterclockwise). An S-Z stranding is formed when cable elements reach a first specified number of twisted revolutions along the longitudinal axis of the optical fiber cable in a first direction (either S or Z), this stranding is repeated, the stranding direction is reversed for a second specified number of twisted revolutions, which may be the same specified number as the first, and this stranding is repeated. Cables may have eight "S" followed by eight "Z", or four "S" followed by four "Z", for example. Each loose tube may be termed a "cable element". The twisted cable element has an "element pitch diameter" about the central axis; the element pitch diameter is a diameter of a circular path a central axis of the cable element takes around a central axis of the cable. A lay length of the cable element is a length the cable element taken for one rotation (360°) around the cable central axis. Lay length may also be known in the art as "stranding pitch" or merely "pitch".

To reduce strain of HCFs within a MLT cable, cable element lay length (of the S, Z, or S-Z HCF) relative to element pitch diameter is increased. This is demonstrated by the values in TABLE 2.

**TABLE 2**

| | **Uni t** | **HCF Cable 1** | **HCF Cable 2** | **SMF Cable** | **Ratio** |
|---|---|---|---|---|---|
| Cable Element Lay Length | mm | 400 | 450 | 120 | 3.75 |
| Element Pitch Diameter | mm | 4.5 | 7.4 | 8.2 | 0.90 |

To reduce the strain of HCFs within a MLT cable, the cable element lay length may substantially similar to the HCF values in TABLE 2, may be in a range of 325 mm to 500 mm, or may be in a range of 375 mm to 450 mm.

The cable element lay length ratio value in TABLE 2 demonstrates how substantially different the cable element lay length of the HCF cable is to that of a traditional SMF cable.

A relationship between the cable element lay length and the element pitch diameter is the cable element "lay angle" or "pitch angle", which may be determined by creating a triangle from the element lay length on one side, and a perimeter of the circle described by the element mean pitch diameter on another side. As demonstrated in TABLE 3, a HCF cable lay angle substantially differs from that of a SMF cable. To achieve a HCF Cable 1 or HCF Cable 2 lay angle, other cable characteristics must be altered. For example, decreasing a lay angle for an SMF cable may mean the SMF was exposed to tensile loads along the cable provide an intolerable fiber strain relief. When an axial load is applied to the cable it will strain, however the resulting fiber strain is dependent upon the cable modulus and fiber over feed. The afforded difference between the cable strain and fiber strain is commonly called the "strain relief'. The "strain free window" of the fiber within the cable is the combined axial cable extension and compression in which the fiber is under no stress due to the external axial load being applied to the cable by either mechanical means or by environmental (temperature) related expansion or contraction of the cable. The HCF cable is adapted so that when exposed to tensile loads, an appropriate fiber strain relief is afforded. The HCF cable is adapted by (i) reducing a fiber over feed of the tube element (also known in the art as "fiber excess"), and (ii) increasing a cable modulus of the HCF cable. The fiber over feed being the positive difference between linear length of optical fiber relative to the linear length of the tube (element). The cable modulus being the cable modulus of elasticity for tension or axial compression. The modulus is defined as the ratio of the stress (force per unit area) applied to the object and the resulting axial strain (displacement or deformation) in the linear elastic region of the material. This is calculated using the rule of mixtures applied to the cable components. The fiber excess is produced during the fiber buffering (tubing) process, and is controllable during stranding by manipulating a tension applied to the tube element because during the stranding process a load is applied to each of the elements (tubes). As a result there is axial extension of the elements. This extension of the element reduces the relative over feed of the fiber within the element. This modifies the strain free window.

**TABLE 3**

| | **Unit** | **HCF Cable 1** | **HCF Cable 2** | **SMF Cable** | **Ratio** |
|---|---|---|---|---|---|
| Lay Angle | Deg | 2.0 | 3.0 | 12.1 | 0.24 |
| Tension applied to Tube Element | N | 20.0 | 20.6 | 8.8 | 2.33 |
| Cable Tensile Modulus (LASE 0.2%) | N | 2500 | 2500 | 1500 | 1.7 |

The lay angle of the HCF cables is substantially different to those of SMF cables; in TABLE 3 a ratio of the HCF cable 2 to the SMF cable is of 0.24.

During cable manufacture, the tension applied to the tube element is substantially increased (by approximately a ratio of 2.33 for the HCF Cable 2 to the SMF cable), which limits the fiber over feed.

To increase the cable tensile modulus for the HCF cables, the cable aramid content may, for example, be increased. Such a high level of aramid is not generally provided for ducted cable applications.

The lay angle of cable elements in a HCF cable may be substantially similar to the HCF cable lay angle values in TABLE 3, may be in a range of 1 degree to 6 degrees, or may be in a range of 2 degrees to 4 degrees.

During manufacture of a HCF cable with cable element of diameter greater than or equal to 2.5 mm, for example 3.0 mm, the tension applied to the cable element may be in a range of 16 N to 24 N, be in a range of 18 N to 22 N, or be in a range of 20 N to 21 N.

During manufacture of a HCF cable with cable element of diameter of less than 2.5 mm, for example 1.6 mm, the tension applied to the cable element may be in a range of 4 N to 12 N, or be in a range of 6 N to 8 N.

The above HCF cable parameters account for thermal expansion and tensile loading, but additional parameters aid compensation for thermal contraction of a HCF cable. The density of HCF in the cable elements is designed to provide a sufficient degree of freedom during thermal contraction of a HCF cable. The parameter of density of HCF is dependent upon HCF size, the desired operating range of the HCF cable, and the HCF response to micro-bending and macro-bending. TABLE 4 provides HCF cable designs with a lower fiber density than that of a SMF cable as illustrated by the ratio of 0.44 of the HCF Cable 2 to the CMS Cable.

**TABLE 4**

| | **Unit** | **HCF Cable 1** | **HCF Cable 2** | **SMF Cable** | **Ratio** |
|---|---|---|---|---|---|
| Number of Fibers in Cable Element | number | 6 | 8 | 12 | |
| Number of Elements in Cable | number | 4 | 8 | 12 | |
| Number of Fibers in Cable | number | 24 | 64 | 144 | |
| Cable Diameter | mm | 12.8 | 12.8 | 12.8 | |
| Fiber Density Within the Cable | f / mm² | 0.19 | 0.50 | 1.12 | 0.44 |

Cable subducts are available in different sizes. The given examples of HCF cables relate to a cable diameter of 12.8 mm that is a common size to blow/pull into a 25/20 subduct. Other common cables are approximately 6.5 mm for a 10/8 subduct, and 8.0 mm for 14/10 subduct.

Alternatively or in addition to the other examples described herein, examples include any combination of the following:
Clause A. An optical fiber cable comprising a cable element, wherein: the cable element comprises a hollow core optical fiber (HCF); and a lay length of the cable element is: in a range of 325 mm to 500 mm, in a range of 375 mm to 450 mm, is approximately 400 mm, or is approximately 450 mm.
Clause B. The optical fiber cable of clause A, wherein a lay angle of the cable element is: in a range of 1 degree to 6 degrees, in a range of 2 degrees to 4 degrees, is approximately 2 degrees, or is approximately 3 degrees.
Clause C. The optical fiber cable of clause A, wherein an outside diameter of the HCF is: in a range of 0.27 mm to 0.43 mm, in a range of 0.31 mm to 0.39 mm, is approximately 0.31 mm, is approximately 0.385 mm, or is approximately 0.4 mm.
Clause D. The optical fiber cable of clause A, wherein a cable element diameter is greater than or equal to 2.5 mm; and a tension along the cable element is: in a range of 16 N to 24 N, in a range of 18 N to 22 N, in a range of 20 N to 21 N.
Clause E. The optical fiber cable of clause A, wherein a cable element diameter is less than 2.5 mm; and a tension along the cable element is: in a range of 4 N to 12 N, or in a range of 6 N to 8 N.
Clause F. The optical fiber cable of clause A, wherein the density of HCF with the cable element is below approximately 0.8 f / mm2.
Clause G. The optical fiber cable of clause A, wherein the cable element has a pitch diameter of less than or equal to 7.5 mm, or is less than or equal to 5 mm.
Clause H. The optical fiber cable of clause A, wherein the optical fiber cable outside cable diameter is approximately 12.8 mm.
Clause I. The optical fiber cable of clause A, wherein the optical fiber cable a second cable element, where the second cable element comprises a second HCF.
Clause J. The optical fiber cable of clause A, wherein the optical fiber cable a second cable element, where the second cable element comprises an optical fiber or a type other than a HCF.
Clause K. The optical fiber cable of clause A, wherein the optical fiber cable a further cable element, where the further cable element does not comprise an optical fiber.
Clause L. The optical fiber cable of clause A, wherein the HCF is an optical fiber comprising hollow structure extending axially along the HCF.
Clause M. The optical fiber cable of clause A, wherein the optical fiber cable is a multi-loose tube (MLT) cable.
Clause N. The optical fiber cable of clause A, wherein the optical fiber cable comprises at least 24 HCFs.
Clause O. A method of manufacturing an optical fiber cable, wherein: the optical fiber cable comprises a cable element; the cable element comprises a hollow core optical fiber (HCF); and a lay length of the cable element is: in a range of 325 mm to 500 mm, in a range of 375 mm to 450 mm, is approximately 400 mm, or is approximately 450 mm.
Clause P. The method of manufacturing an optical fiber cable of clause O, wherein a cable element diameter is greater than or equal to 2.5 mm; and a tension along the cable element is: in a range of 16 N to 24 N, in a range of 18 N to 22 N, or in a range of 20 N to 21 N.
Clause Q. The method of manufacturing an optical fiber cable of clause O, wherein a cable element diameter is less than 2.5 mm; and a tension along the cable element is: in a range of 4 N to 12 N, or in a range of 6 N to 8 N.
Clause R. A method of transmitting information, the method comprising: transmitting information encoded in light through an optical fiber cable comprising a cable element, wherein the cable element comprises a hollow core optical fiber (HCF), a lay length of the cable element is: in a range of 325 mm to 500 mm, in a range of 375 mm to 450 mm, is approximately 400 mm, or is approximately 450 mm.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. An optical fiber cable (20, 20', 30) comprising a cable element (23, 25, 35), wherein:
the cable element comprises a hollow core optical fiber, HCF (24, 26, 36); and
a lay length of the cable element is:
in a range of 325 mm to 500 mm,
in a range of 375 mm to 450 mm,
is approximately 400 mm, or
is approximately 450 mm.

2. The optical fiber cable of claim 1, wherein a lay angle of the cable element is:
in a range of 1 degree to 6 degrees,
in a range of 2 degrees to 4 degrees,
is approximately 2 degrees, or
is approximately 3 degrees.

3. The optical fiber cable of claim 1, wherein an outside diameter of the HCF is:
in a range of 0.27 mm to 0.43 mm,
in a range of 0.31 mm to 0.39 mm,
is approximately 0.31 mm,
is approximately 0.385 mm, or
is approximately 0.4 mm.

4. The optical fiber cable of claim 1, wherein
a cable element diameter is greater than or equal to 2.5 mm; and
a tension along the cable element is:
in a range of 16 N to 24 N,
in a range of 18 N to 22 N, or
in a range of 20 N to 21 N.

5. The optical fiber cable of claim 1, wherein
a cable element diameter is less than 2.5 mm; and
a tension along the cable element is:
in a range of 4 N to 12 N, or
in a range of 6 N to 8 N.

6. The optical fiber cable of claim 1, wherein the density of HCF with the cable element is below approximately 0.8 f / mm².

7. The optical fiber cable of claim 1, wherein the cable element has a pitch diameter of less than or equal to 7.5 mm, or is less than or equal to 5 mm.

8. The optical fiber cable of claim 1, wherein the optical fiber cable outside cable diameter is approximately 12.8 mm.

9. The optical fiber cable of claim 1, wherein the optical fiber cable a second cable element, where the second cable element comprises a second HCF.

10. The optical fiber cable of claim 1, wherein the optical fiber cable a second cable element, where the second cable element comprises an optical fiber or a type other than a HCF.

11. The optical fiber cable of claim 1, wherein the optical fiber cable a further cable element, where the further cable element does not comprise an optical fiber.

12. The optical fiber cable of claim 1, wherein the HCF is an optical fiber comprising hollow structure extending axially along the HCF.

13. The optical fiber cable of claim 1, wherein the optical fiber cable is a multi-loose tube, MLT, cable.

14. A method of manufacturing an optical fiber cable, wherein:
the optical fiber cable (20, 20', 30) comprises a cable element (23, 25, 35);
the cable element comprises a hollow core optical fiber, HCF (24, 26, 36); and
a lay length of the cable element is:
in a range of 325 mm to 500 mm,
in a range of 375 mm to 450 mm,
is approximately 400 mm, or
is approximately 450 mm.

15. A method of transmitting information, the method comprising: transmitting information encoded in light through an optical fiber cable (20, 20', 30) comprising a cable element (23, 25, 35), wherein the cable element comprises a hollow core optical fiber, HCF (24, 26, 36), a lay length of the cable element is: in a range of 325 mm to 500 mm, in a range of 375 mm to 450 mm, is approximately 400 mm, or is approximately 450 mm.
